(19) **Europäisches Patentamt**
**European Patent Office**
**Office européen des brevets**

(11) **EP 4 787 057 A1**

(12) **EUROPEAN PATENT APPLICATION**
published in accordance with Art. 153(4) EPC

(43) Date of publication:
**05.08.2026 Bulletin 2026/32**

(51) International Patent Classification (IPC):
**G02B 27/09** (2006.01)      **G02B 27/42** (2006.01)
**G02B 19/00** (2006.01)

(21) Application number: **24873090.5**

(52) Cooperative Patent Classification (CPC):
**G02B 19/00; G02B 27/09; G02B 27/42**

(22) Date of filing: **19.09.2024**

(86) International application number:
**PCT/KR2024/096194**

(87) International publication number:
**WO 2025/071383 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.09.2023 KR 20230130240**

(71) Applicants:
• **Institute for Basic Science**
**Yuseong-gu**
**Daejeon 34126 (KR)**

• **Gwangju Institute of Science and Technology**
**Gwangju 61005 (KR)**

(72) Inventors:
• **KIM, Kyung Taec**
**Gwangju 61005 (KR)**
• **KWON, Tae Yong**
**Gwangju 61005 (KR)**
• **NAM, Chang Hee**
**Gwangju 61005 (KR)**

(74) Representative: **Kuhnen & Wacker**
**Patent- und Rechtsanwaltsbüro PartG mbB**
**Prinz-Ludwig-Straße 40 A**
**85354 Freising (DE)**

(54) **LIGHT FOCUSING DEVICE AND OPTICAL SYSTEM FOR REAL-TIME MONITORING OF LASER BEAM**

(57)     The present invention comprises a light focusing device comprising micro-diffraction elements configured to diffract incident light, applied by a user, into G focused beams, wherein the micro-diffraction elements each belong to one of G groups, micro-diffraction elements belonging to a g-th group among the G groups generate a g-th focused beam, a density distribution of the micro-diffraction elements belonging to the g-th group is adjustable to apply an arbitrary intensity distribution to the g-th focused beam before the g-th focused beam is focused, positions of the micro-diffraction elements belonging to the g-th group are adjustable to apply an arbitrary wavefront to the g-th focused beam before the g-th focused beam is focused, and G is configured to be 2 or greater.

FIG. 1

**Description**

## TECHNICAL FIELD

The present invention relates to a light focusing device that generates a plurality of focused beams using an incident laser beam and an optical system comprising the same. More specifically, the present invention relates to a light focusing device that controls the distribution and positions of a large number of micro-diffraction elements included in the light focusing device, applies an arbitrary intensity distribution and an arbitrary wavefront to an incident laser beam, and generates two or more focused beams; or an optical system capable of measuring the intensity distribution and wavefront of the incident laser beam using the shapes of the focused beams generated by the light focusing device.

## BACKGROUND ART

In optical experiments and industrial applications, it is sometimes necessary to measure in real time the spatial properties (i.e., intensity distribution and wavefront) of a laser beam. The intensity distribution of an incident laser beam can be measured using an imaging device, and the wavefront of a laser beam can be measured using methods such as a Shack-Hartmann sensor or a shearing interferometer. However, applying these methods requires the use of additional optical instruments. For example, to measure the intensity distribution and wavefront without disturbing a laser beam that is being used for another purpose, a portion of the laser beam is replicated and separated using a beam splitter or the like. In addition, if the sensor size of the imaging device does not match the size of the laser beam, the size of the laser beam must be changed using an optical system such as a telescope. Furthermore, if the intensity of the laser beam to be measured is too strong, the intensity of the laser beam must be appropriately attenuated using an absorptive or reflective filter. Additional optical instruments increase the complexity of the measurement and introduce unwanted aberrations, thereby increasing measurement errors.

Another method for measuring the wavefront of a laser beam is modal wavefront sensing, in which an incident laser beam is divided into a plurality of beams, additional different wavefronts are applied, and the beams are focused and compared in terms of intensity to measure the wavefront. However, this approach also has the disadvantage of requiring optical instruments such as beam splitters to generate a plurality of laser beams. Yet another method using a binary phase mask has been proposed [US6570143]. In this method, diffraction is used to apply different wavefronts and split the beam into a plurality of focused beams. The intensity distribution and wavefront of the incident laser beam can be measured from the shape changes of the plurality of focused beams. However, this method also requires an additional focusing lens in addition to the binary phase mask, which introduces the problem of unwanted aberrations being applied.

Accordingly, there is a need for a method of measuring the intensity distribution and wavefront of a laser beam that does not require additional optical instruments such as beam splitters, telescopes, filters, or focusing lenses, and that does not interfere with the path of the laser beam in use.

## DISCLOSURE OF THE INVENTION

### TECHNICAL PROBLEM

One problem to be solved by the present invention is to provide a light focusing device that applies an arbitrary intensity distribution and an arbitrary wavefront to two or more laser beams using an incident laser beam and focuses the beams; or an optical system capable of measuring the spatial intensity distribution and wavefront of a laser beam using the shapes of the laser beams focused by the light focusing device.

### TECHNICAL SOLUTION

One embodiment for solving the above-described problem comprises a light focusing device comprising micro-diffraction elements configured to diffract incident light, applied by a user, into G focused beams, wherein the micro-diffraction elements each belong to one of G groups, micro-diffraction elements belonging to a g-th group among the G groups generate a g-th focused beam, a density distribution of the micro-diffraction elements belonging to the g-th group is adjustable to apply an arbitrary intensity distribution to the g-th focused beam before the g-th focused beam is focused, positions of the micro-diffraction elements belonging to the g-th group are adjustable to apply an arbitrary wavefront to the g-th focused beam before the g-th focused beam is focused, and G is configured to be 2 or greater.

In one embodiment, the micro-diffraction elements comprise micro-structures that cause diffraction in a reflection or transmission direction, including micro-diffraction mirrors, micro-pinholes, and the like.

In one embodiment, the G focused beams focused by the micro-diffraction elements of the light focusing device are focused at different positions on a single focal plane.

In one embodiment, a coordinate ( $x_n^{(g)}, y_n^{(g)}, z_n^{(g)}$ ) at which an n-th micro-diffraction element among the micro-diffraction elements belonging to the g-th group is arranged is determined such that positions of the micro-diffraction elements do not overlap each other, and simultaneously such that a phase error ( $\epsilon_n^{(g)}$ ) determined by the equation below is as close to 0 as possible,

$$\epsilon_n^{(g)} = \left| k \left[ p_n^{(g)} + q_n^{(g)} - p_{in} - q_{out}^{(g)} - m\lambda \right] - \Phi^{(g)}(x, y) \right|^2$$

where $p_n^{(g)}$ is a distance between a light source ($x_{in}$, $y_{in}$, $z_{in}$) and an n-th micro-diffraction element ( $x_n^{(g)}, y_n^{(g)}, z_n^{(g)}$ ) belonging to the g-th group, and is calculated by the equation below,

$$p_n^{(g)} = \sqrt{\left(x_n^{(g)} - x_{in}\right)^2 + \left(y_n^{(g)} - y_{in}\right)^2 + \left(z_n^{(g)} - z_{in}\right)^2}$$

$q_n^{(g)}$ is a distance between an n-th micro-diffraction element ( $x_n^{(g)}, y_n^{(g)}, z_n^{(g)}$ ) belonging to the g-th group and a focal point ( $x_{out}^{(g)}, y_{out}^{(g)}, z_{out}^{(g)}$ ) of the g-th focused beam, and is calculated by the equation below,

$$q_n^{(g)} = \sqrt{\left(x_n^{(g)} - x_{out}^{(g)}\right)^2 + \left(y_n^{(g)} - y_{out}^{(g)}\right)^2 + \left(z_n^{(g)} - z_{out}^{(g)}\right)^2}$$

$p_{in}$ is a distance between the light source and a central point of the light focusing device, and is calculated by the equation below,

$$p_{in} = \sqrt{x_{in}^2 + y_{in}^2 + z_{in}^2}$$

$q_{out}^{(g)}$ is a distance between a center *(x = 0, y = 0, z = 0)* of the light focusing device and the focal point ( $x_{out}^{(g)}, y_{out}^{(g)}, z_{out}^{(g)}$ ) of the g-th focused beam, and is calculated by the equation below,

$$q_{out}^{(g)} = \sqrt{\left(x_{out}^{(g)}\right)^2 + \left(y_{out}^{(g)}\right)^2 + \left(z_{out}^{(g)}\right)^2}$$

*m* is a non-negative integer, *k* is a wave number of the incident light and is a number obtained by dividing a product of $2\pi$ and a refractive index of a space through which light travels by a central wavelength of the light, and $\Phi^{(g)}$ *(x, y)* is an arbitrary wavefront function applied to the g-th focused beam before the g-th focused beam is focused by the micro-diffraction elements belonging to the g-th group.

In one embodiment, a size of the micro-diffraction elements is determined such that a change in the phase error ( $\epsilon_n^{(g)}$ ) within the n-th micro-diffraction element belonging to the g-th group is less than $\pi$.

In one embodiment, an intensity of the G focused beams is adjustable by adjusting the size of the micro-diffraction elements.

In one embodiment, one or more pairs of focused beams among the G focused beams apply the wavefront function with opposite signs to each other, so that wavefront information of the incident light can be recognized without a separate reconstruction process.

In one embodiment, the intensity distribution and wavefront of the incident light can be reconstructed using a coherent diffraction imaging reconstruction method or the like, using the G focused beams or a portion thereof.

In one embodiment, in a portion of the light focusing device where no micro-diffraction elements are present, some or all of the incident light is absorbed, transmitted, or reflected, so that the incident light can be used for another purpose, comprising the light focusing device.

One embodiment for solving the above-described problem comprises: a light focusing device comprising micro-diffraction elements configured to diffract incident light, applied by a user, into G focused beams; and an imaging device configured to receive the G focused beams focused by the micro-diffraction elements of the light focusing device and convert the received beams into electrical signals, wherein the micro-diffraction elements each belong to one of G groups, micro-diffraction elements belonging to a g-th group among the G groups generate a g-th focused beam, a density distribution of the micro-diffraction elements belonging to the g-th group is adjustable to apply an arbitrary intensity distribution to the g-th focused beam before the g-th focused beam is focused, positions of the micro-diffraction elements belonging to the g-th group are adjustable to apply an arbitrary wavefront to the g-th focused beam before the g-th focused beam is focused, and G is configured to be 2 or greater, comprising an optical system capable of measuring the intensity distribution and wavefront of the incident light.

In one embodiment, the micro-diffraction elements comprise micro-structures that cause diffraction in a reflection or transmission direction, including micro-diffraction mirrors, micro-pinholes, and the like.

In one embodiment, the G focused beams focused by the micro-diffraction elements of the light focusing device are focused at different positions on a single focal plane.

In one embodiment, a coordinate ( $x_n^{(g)}, y_n^{(g)}, z_n^{(g)}$ ) at which an n-th micro-diffraction element among the micro-diffraction elements belonging to the g-th group is arranged is determined such that positions of the micro-diffraction elements do not overlap each other, and simultaneously such that a phase error ( $\epsilon_n^{(g)}$ ) determined by the equation below is as close to 0 as possible,

$$\epsilon_n^{(g)} = \left| k \left[ p_n^{(g)} + q_n^{(g)} - p_{in} - q_{out}^{(g)} - m\lambda \right] - \Phi^{(g)}(x,y) \right|^2$$

where $p_n^{(g)}$ is a distance between a light source ($x_{in}, y_{in}, z_{in}$) and an n-th micro-diffraction element ( $x_n^{(g)}, y_n^{(g)}, 0$ ) belonging to the g-th group, and is calculated by the equation below,

$$p_n^{(g)} = \sqrt{\left(x_n^{(g)} - x_{in}\right)^2 + \left(y_n^{(g)} - y_{in}\right)^2 + (z_{in})^2}$$

$q_n^{(g)}$ is a distance between an n-th micro-diffraction element $\left(x_n^{(g)}, y_n^{(g)}, 0\right)$ belonging to the g-th group and a focal point $\left(x_{out}^{(g)}, y_{out}^{(g)}, z_{out}^{(g)}\right)$ of the g-th focused beam, and is calculated by the equation below,

$$q_n^{(g)} = \sqrt{\left(x_n^{(g)} - x_{out}^{(g)}\right)^2 + \left(y_n^{(g)} - y_{out}^{(g)}\right)^2 + \left(z_{out}^{(g)}\right)^2}$$

$p_{in}$ is a distance between the light source ($x_{in}, y_{in}, z_{in}$) and a central point ($x = 0, y = 0, z = 0$) of the light focusing device, and is calculated by the equation below,

$$p_{in} = \sqrt{x_{in}^2 + y_{in}^2 + z_{in}^2}$$

$q_{out}^{(g)}$ is a distance between a center (x = 0, y = 0, z = 0) of the light focusing device and the focal point $\left(x_{out}^{(g)}, y_{out}^{(g)}, z_{out}^{(g)}\right)$ of the g-th focused beam, and is calculated by the equation below,

$$q_{out}^{(g)} = \sqrt{\left(x_{out}^{(g)}\right)^2 + \left(y_{out}^{(g)}\right)^2 + \left(z_{out}^{(g)}\right)^2}$$

$m$ is a non-negative integer, $k$ is a wave number of the incident light and is a number obtained by dividing a product of $2\pi$ and a refractive index of a space through which light travels by a central wavelength of the light, and $\Phi^{(g)}(x, y)$ is an arbitrary wavefront function applied to the g-th focused beam before the g-th focused beam is focused by the micro-diffraction elements belonging to the g-th group.

In one embodiment, a size of the micro-diffraction elements is determined such that a change in the phase error $\left(\epsilon_n^{(g)}\right)$ within the n-th micro-diffraction element belonging to the g-th group is less than $\pi$.

In one embodiment, an intensity of the G focused beams is adjustable by adjusting the size of the micro-diffraction elements.

In one embodiment, one or more pairs of focused beams among the G focused beams apply the wavefront function with opposite signs to each other, so that wavefront information of the incident light can be recognized without a separate reconstruction process.

In one embodiment, the wavefront can be reconstructed using a coherent diffraction imaging reconstruction method or the like, using the G focused beams or a portion thereof.

In one embodiment, in a portion of the light focusing device where no micro-diffraction elements are present, some or all of the incident light is absorbed, transmitted, or reflected, so that the incident light can be used for another purpose.

In one embodiment, a relationship between wavefronts measured using two or more light focusing devices is established, and intensity distribution and wavefront information of the incident laser beam at a location intended to be measured by the remaining one light focusing device can be inferred through the intensity distribution and wavefront information measured at any one of the two or more light focusing devices using the established relationship, comprising the optical system.

## ADVANTAGEOUS EFFECTS

The present invention provides a light focusing device capable of focusing incident light into a plurality of focused beams having an arbitrary intensity distribution and an arbitrary wavefront.

The present invention provides an optical system capable of measuring the intensity distribution and wavefront information of incident light by focusing the incident light into a plurality of focused beams having an arbitrary intensity distribution and an arbitrary wavefront.

The light focusing device of the present invention is easy to manufacture in a large area and focuses incident light directly into focused beams, and therefore does not require additional optical instruments such as telescopes, focusing lenses, or focusing mirrors.

The light focusing device and optical system of the present invention use only a portion of the incident light for measurement by utilizing the diffraction effect, so that the undiffracted incident light can continue to be used for another purpose.

The light focusing device and optical system of the present invention use only a portion of the incident light for measurement by utilizing the diffraction effect, which has the effect of reducing the intensity of the incident laser beam. Therefore, it is not necessary to adjust the intensity of the incident laser beam, and the use of additional optical instruments for intensity adjustment can also be avoided.

## BRIEF DESCRIPTION OF THE DRAWINGS

FIG. 1 is a diagram illustrating an optical system including a light focusing device according to one embodiment of the present invention.

FIG. 2 is a diagram showing distances and coordinates of each element in the optical system of FIG. 1.

FIG. 3 is a diagram illustrating first (g=1) contour lines on which micro-diffraction elements of a first (g=1) group are arranged in a light focusing device according to one embodiment of the present invention.

FIG. 4 is a diagram showing a state in which a plurality of micro-diffraction elements are arranged in the light focusing device of FIG. 3.

FIG. 5 is a diagram showing an optical system including a light focusing device arranged in various ways according to various embodiments of the present invention.

FIG. 6 is a diagram illustrating a plurality of optical systems for establishing a relationship between two optical systems and inferring the measured value at one location from a measurement at another location, according to one embodiment of the present invention.

FIG. 7 is a diagram showing focal points at which incident light having no aberration is focused using the optical system of the present invention.

FIG. 8 is a diagram showing focal points at which incident light having vertical astigmatism is focused using the optical system of the present invention.

## MODE FOR CARRYING OUT THE INVENTION

Hereinafter, embodiments of the present invention will be described clearly and in detail to an extent sufficient for a person having ordinary skill in the technical field of the present invention to readily practice the present invention.

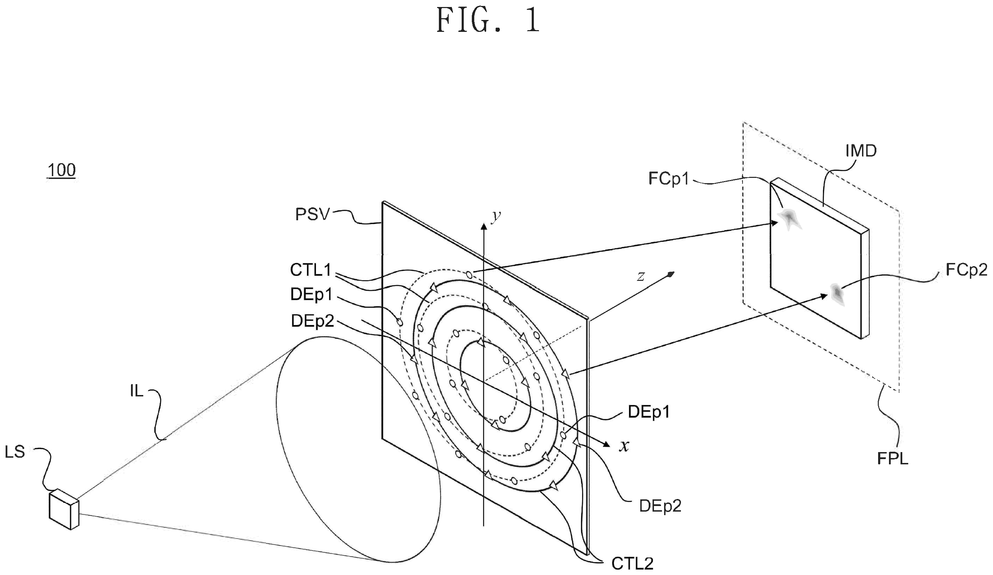

FIG. 1 is a diagram illustrating an optical system including a light focusing device according to one embodiment of the present invention.

Referring to FIG. 1, an optical system 100 can comprise a light focusing device PSV and an imaging device IMD.

Incident light IL emitted from a light source LS can travel toward the light focusing device PSV.

The light focusing device PSV can be configured to receive the incident light IL. The light focusing device PSV can comprise a plurality of micro-diffraction elements configured to diffract the incident light IL. The plurality of micro-diffraction elements can be arranged to diffract the incident light IL and focus the diffracted light to a plurality of focal points. The plurality of micro-diffraction elements each contribute to focusing one of G focused beams. Accordingly, the plurality of micro-diffraction elements can be divided into G groups. In this embodiment, for convenience, the case of G=2, i.e., two focused beams, is assumed.

In the embodiment shown in FIG. 1, for convenience, the plurality of micro-diffraction elements belonging to the first group (g=1) are referred to as first micro-diffraction elements DEp1, a plurality of contour lines on which the first micro-diffraction elements can be located are referred to as first contour lines CTL1, the focused beam focused by the first micro-diffraction elements is referred to as a first focused beam, and the point at which the first focused beam is focused is referred to as a first focal point FCp1. Similarly, for the second group (g=2), the corresponding elements are referred to as second micro-diffraction elements DEp2, second contour lines CTL2, a second focused beam, and a second focal point FCp2, respectively.

The light focusing device PSV comprises a plurality of first micro-diffraction elements DEp1 and a plurality of second micro-diffraction elements DEp2.

Light diffracted by the plurality of micro-diffraction elements of the light focusing device PSV can be focused on the same focal plane FPL. For example, the incident light IL can be diffracted by the first micro-diffraction elements DEp1 and focused at the first focal point FCp1 on the focal plane FPL, and the incident light IL can also be diffracted by the second micro-diffraction elements DEp2 and focused at the second focal point FCp2 on the focal plane FPL. The first focal point FCp1 and the second focal point FCp2 can have different coordinates on the focal plane FPL and can be separated from each other. In this specification, 'focusing' light means collecting light within a limited space on the focal plane FPL. In this specification, a focal point means that diffracted light is focused in a predetermined region.

In FIG. 1, the micro-diffraction elements are represented as circular or triangular shapes for distinction according to the group to which they belong; however, the form of the micro-diffraction elements is not limited. That is, all micro-diffraction elements can be fabricated in the same shape.

The imaging device IMD can be configured to capture the beams focused on the focal plane FPL. The imaging device IMD can be configured to receive the beams focused at the first focal point FCp1 and the second focal point FCp2 and convert the received beams into electrical signals for output. The imaging device IMD can be configured to output the electrical signals to an external computing device.

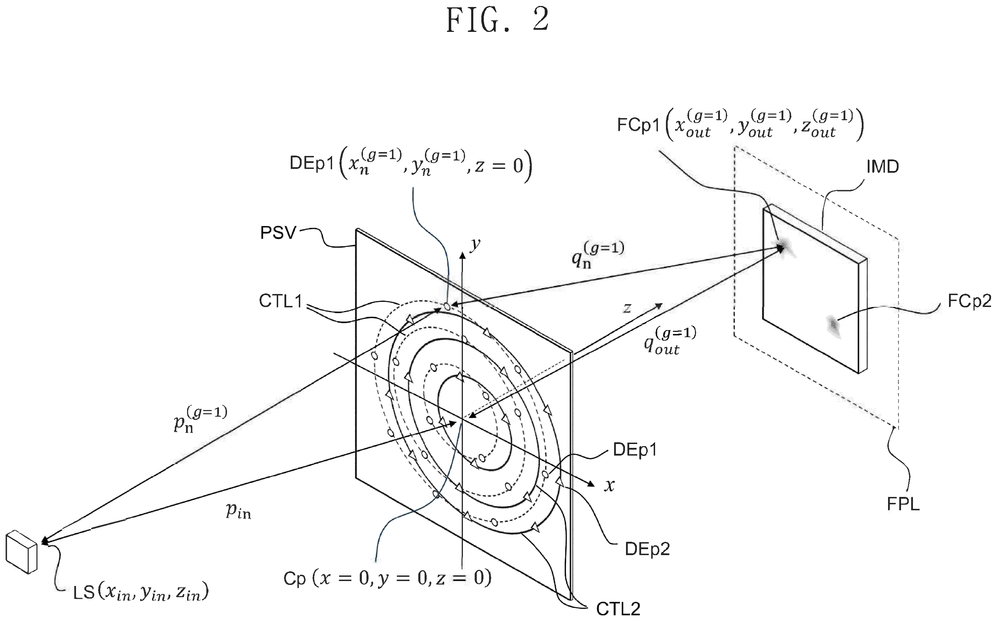

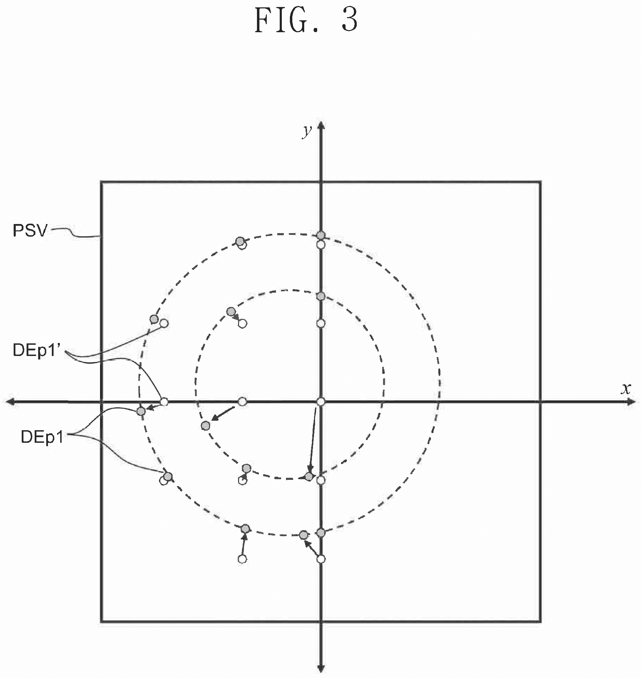

Hereinafter, with reference to FIG. 2 or FIG. 3, a method for determining positions at which first micro-diffraction elements DEp1 for applying an arbitrary intensity distribution and an arbitrary wavefront to the input light and focusing the input light at the first focal point FCp1 are arranged on the light focusing device PSV will be described in detail.

FIG. 2 illustrates definitions of distances between the light source LS, the micro-diffraction elements, and the focal point in order to explain the process of applying an arbitrary wavefront. FIG. 2 also shows the case (i.e., g=1) in which the input light IL incident from the light source LS is diffracted by the first micro-diffraction element DEp1 and focused at the first focal point FCp1. As shown in FIG. 2, $x$, y, and z axes can be defined with reference to the surface on which the micro-diffraction elements are distributed on the light focusing device PSV. In addition, the distance between the light source LS and the center of the light focusing device PSV is defined as $p_{in}$, the distance between the light source LS and the n-th micro-diffraction element among the first micro-diffraction elements DEp1 is defined as $p_n^{(g=1)}$, the distance between the first focal point FCp1 and the n-th micro-diffraction element among the first micro-diffraction elements DEp1 is defined as $q_n^{(g=1)}$, and the distance between the central point of the light focusing device PSV and the first focal point FCp1 is defined as $q_{out}$. As shown in FIG. 2, the light source LS or the imaging device IMD need not be located on the z-axis set with respect to the light focusing device PSV, and any position is possible.

The coordinate of the light source LS from which the incident light IL is emitted can be defined as ($x_{in}$, $y_{in}$, $z_{in}$).

The coordinate of the n-th first micro-diffraction element among the first micro-diffraction elements DEp1 belonging to the first group (g=1) for focusing the incident light IL can be defined as ( $x_n^{(g=1)}, y_n^{(g=1)}$ , 0) on the xy-plane where z=0. The coordinate of the central point Cp of the light focusing device PSV can be defined as (x = 0, y = 0, z = 0). The coordinate of the first focal point FCp1 on the focal plane FPL can be defined as ( $x_{out}^{(g=1)}, y_{out}^{(g=1)}, z_{out}^{(g=1)}$ ).

The first contour lines CTL1 on which the first micro-diffraction elements DEp1 are arranged on the light focusing device PSV can be specified based on a phase error ( $\epsilon_n^{(g=1)}$ ) of the n-th micro-diffraction element belonging to the first group (g=1) according to Equation1 below.

[Equation 1]

$$\epsilon_n^{(g=1)} = \left| k \left[ p_n^{(g=1)} + q_n^{(g=1)} - p_{in} - q_{out}^{(g=1)} - m\lambda \right] - \Phi^{(g=1)}(x,y) \right|^2$$

In [Equation 1], $p_n^{(g=1)}$ is the distance between the light source LS ($x_{in}$, $y_{in}$, $z_{in}$) and the n-th first micro-diffraction element ( $x_n^{(g=1)}, y_n^{(g=1)}$ , 0), and may be calculated through [Equation 2] below.

[Equation 2]

$$p_n^{(g=1)} = \sqrt{\left( x_n^{(g=1)} - x_{in} \right)^2 + \left( y_n^{(g=1)} - y_{in} \right)^2 + (z_{in})^2}$$

In [Equation 1], $q_n^{(g=1)}$ is the distance between the n-th first micro-diffraction element ( $x_n^{(g=1)}, y_n^{(g=1)}$ , 0) and the first focal point FCp1 ( $x_{out}^{(g=1)}, y_{out}^{(g=1)}, z_{out}^{(g=1)}$ ), and may be calculated through [Equation 3] below.

[Equation 3]

$$q_n^{(g=1)} = \sqrt{\left( x_n^{(g=1)} - x_{out}^{(g=1)} \right)^2 + \left( y_n^{(g=1)} - y_{out}^{(g=1)} \right)^2 + \left( z_{out}^{(g=1)} \right)^2}$$

In [Equation 1], $p_{in}$ is the distance between the light source LS ($x_{in}$, $y_{in}$, $z_{in}$) and the central point (x = 0, y = 0, z = 0) of the light focusing device PSV, and can be calculated through [Equation 4] below.

[Equation 4]

$$p_{in} = \sqrt{x_{in}^2 + y_{in}^2 + z_{in}^2}$$

In [Equation 1], $q_{out}^{(g=1)}$ is the distance between the central point *(x = 0, y = 0, z = 0)* of the light focusing device PSV and the first focal point FCp1 ( $x_{out}^{(g=1)}, y_{out}^{(g=1)}, z_{out}^{(g=1)}$ ), and can be calculated through Equation 5 below.

[Equation 5]

$$q_{out}^{(g=1)} = \sqrt{\left(x_{out}^{(g=1)}\right)^2 + \left(y_{out}^{(g=1)}\right)^2 + \left(z_{out}^{(g=1)}\right)^2}$$

In [Equation 1], *m* is a non-negative integer, and a set of points satisfying the phase error $\epsilon_n^{(g=1)} = 0$ takes the form of a plurality of contour lines. Accordingly, positions on the light focusing device PSV where the first micro-diffraction element DEp1 belonging to g=1 can be located, i.e., positions where $\epsilon_n^{(g=1)} = 0$ , take the form of the contour lines CTL1 shown on the light focusing device in FIG. 2.

In [Equation 1], *k* is the wave number of the input light IL, and is a number obtained by dividing a product of $2\pi$ and the refractive index of the space through which the light travels by the central wavelength of the light.

In [Equation 1], the wavefront function $\Phi^{(g=1)}$ is a function representing an arbitrary wavefront shape additionally applied to the first focused beam focused by the first micro-diffraction elements, and can be expressed by [Equation 6] below.

[Equation 6]

$$\Phi^{(g=1)}(x, y) = \sum_{h=0,1,2,\dots,H} c_h^{(g=1)} Z_h(x, y)$$

In [Equation 6], the wavefront information function $\Phi^{(g=1)}$ can be expressed as a sum of Zernike polynomials or wavefront basis functions playing an equivalent role that represent the characteristic shape of the wavefront, where $Z_h(x, y)$ is the h-th wavefront basis function and $c_h^{(g=1)}$ is the amplitude of the h-th wavefront basis function of the wavefront applied to the first focused beam by the first micro-diffraction elements. Referring to [Equation 6], $\Phi^{(g=1)}$ may be represented as a sum of (H+1) wavefront basis functions.

The coordinate $\left(x_n^{(g=1)}, y_n^{(g=1)}, 0\right)$ at which the n-th first micro-diffraction element is arranged can be determined as a coordinate at which the micro-diffraction elements do not overlap each other and the phase error value $\epsilon_n^{(g=1)}$ of [Equation 1] is as close to 0 as possible.

Coordinates of the first micro-diffraction elements DEp1 at which the phase error value $\epsilon_n^{(g=1)}$ of Equation1 is as close to 0 as possible can be provided in the form of a plurality of contour lines according to the value of *m* (*m* = 0, 1, 2, ...), and the contour lines on which the first micro-diffraction elements DEp1 can be arranged can be defined as first contour lines CTL1.

Referring to FIG. 3, a method of applying an arbitrary intensity distribution while positioning a plurality of first micro-diffraction elements DEp1 on the first contour lines CTL1 on the light focusing device PSV will be described. For example, a case can be assumed in which, on the light focusing device PSV, incident light is diffracted only in the portion where *x* < 0 to generate focused beams. To apply such an intensity distribution, virtual first micro-diffraction elements are uniformly distributed at initial positions DEp1' of the first micro-diffraction elements in the portion of the light focusing device PSV where *x* < 0, and then moved to the nearest first contour line CTL1 from these positions to determine the positions of the first micro-diffraction elements DEp1 that minimize the phase error while having the desired intensity distribution. Here, a somewhat simple example is described in which half of the incident light ($x < 0$) passes through and the other half of the incident light is not allowed to pass through. However, by adjusting the density distribution of the micro-diffraction elements, an arbitrary intensity distribution can be applied to the incident light.

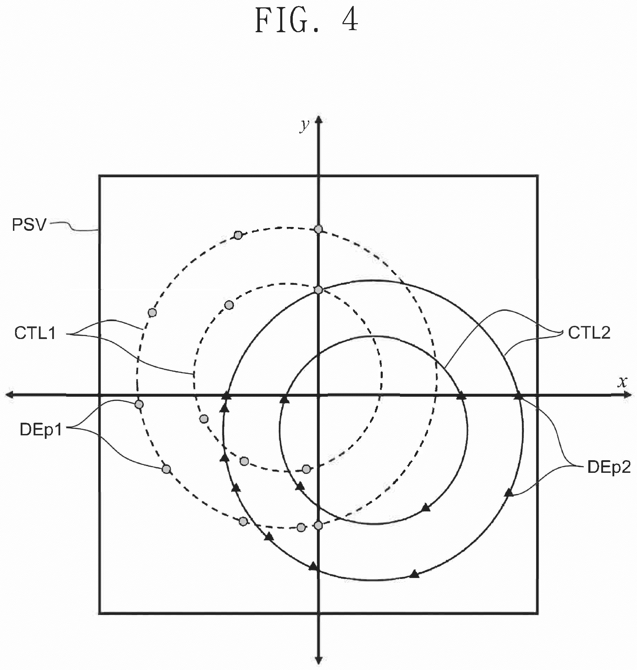

Referring to FIG. 4, a method of positioning micro-diffraction elements that generate a plurality of focused beams will be described. A case can be assumed in which the second micro-diffraction elements generate focused beams by diffracting only in the portion where $y < 0$. As described with reference to FIG. 3, after positioning the first micro-diffraction elements DEp1 on the first contour lines CTL1, the second micro-diffraction elements can be positioned on the second contour lines in the same manner, as shown in FIG. 4. At this time, the positions can be adjusted so that the micro-diffraction elements do not overlap each other. By utilizing the degree of freedom in position adjustment, micro-diffraction elements that generate a plurality of focused beams can be arranged. As shown in FIG. 4, a center point CT1 of the first contour lines CTL1 and a center point CT2 of the second contour lines CTL2 on the light focusing device PSV may not coincide with each other.

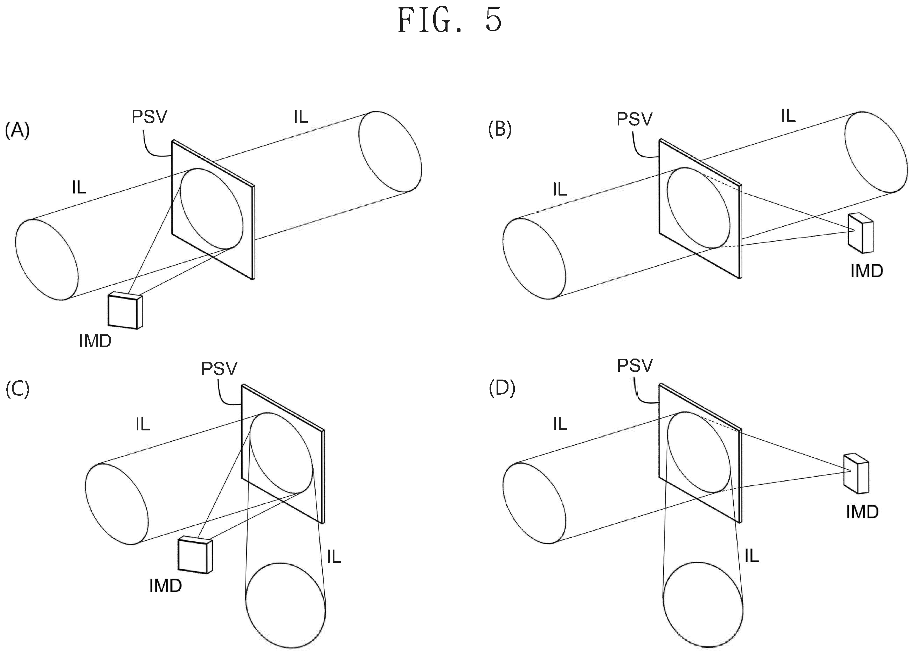

Referring to FIG. 5, a method of simultaneously using the incident light IL for another purpose and measuring the intensity distribution and wavefront of the incident light IL will be described. The light focusing device PSV can be configured so that, in portions where no micro-diffraction elements are located, the incident light is reflected or transmitted. In addition, the diffracted focused beams can also be configured to be reflected or transmitted. Accordingly, the following cases are possible: as shown in (A) of FIG. 5, the incident light is transmitted and the diffracted focused beams are reflected; as shown in (B) of FIG. 5, the incident light is transmitted and the diffracted focused beams are also transmitted; as shown in (C) of FIG. 5, the incident light is reflected and the diffracted focused beams are reflected; and as shown in (D) of FIG. 5, the incident light is reflected and the diffracted focused beams are transmitted. In each case, the intensity distribution and wavefront of the incident light can be measured using the diffracted focused beams, while the reflected or transmitted incident light can be used for another purpose.

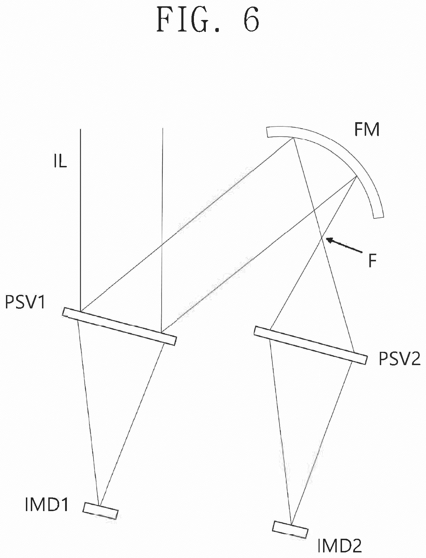

Referring to FIG. 6, a method of measuring the intensity distribution and wavefront of incident light using a plurality of light focusing devices will be described. As shown in FIG. 6, an optical system can be designed using a plurality of light focusing devices. In this embodiment, it is assumed that the incident light IL is focused at a focusing point F using a focusing mirror FM and used for another purpose. The intensity distribution and wavefront of the incident light can be measured using the first light focusing device PSV1 and the imaging device IMD1. In addition, the intensity distribution and wavefront of the incident light IL can be measured using the second light focusing device PSV2 and the imaging device IMD2. Accordingly, it is possible to know how the incident light IL changes as it passes through the two light focusing devices PSV1 and PSV2. When the user uses the incident light for another purpose at the focusing point F, it may not be possible to use the second light focusing device PSV2. Even so, after measuring the intensity distribution and wavefront of the incident light using the first light focusing device, the intensity distribution and wavefront shape of the incident light at PSV2 can be inferred by taking into account the difference measured between the two light focusing devices.

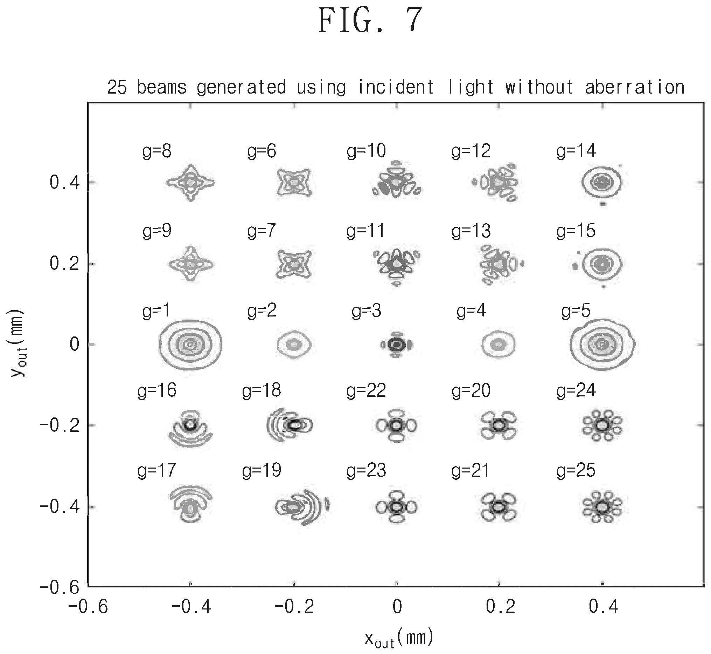

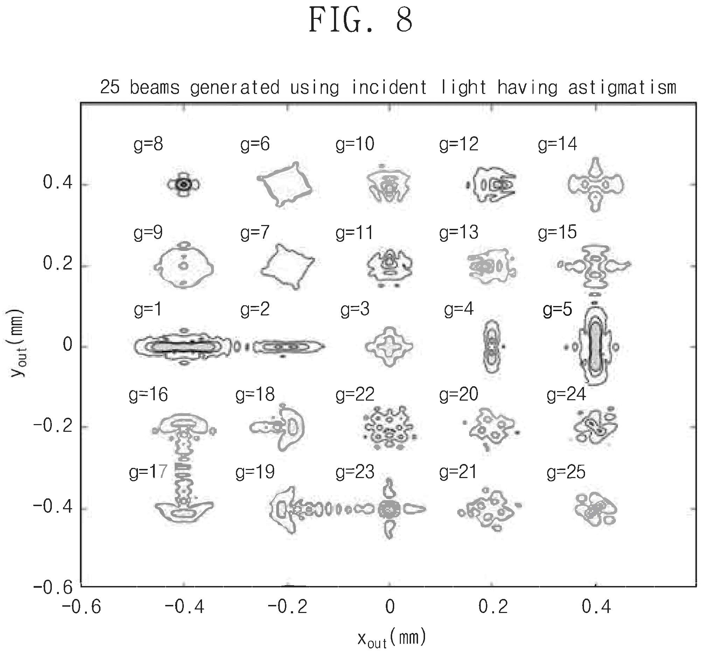

The light focusing device PSV according to the present invention is not limited to the first focal point FCp1 and the second focal point FCp2, and can further comprise micro-diffraction elements of G groups that generate G focal points. Accordingly, one embodiment according to the present invention can form a plurality of focal points through a single light focusing device PSV. The advantages of the present invention in forming a plurality of focal points will be described below with reference to FIGS. 7 and 8.

FIG. 7 is a diagram showing focal points at which incident light having no aberration is focused using the optical system of the present invention. FIG. 8 is a diagram showing focal points at which incident light having vertical astigmatism is focused using the optical system of the present invention.

Referring to FIGS. 7 and 8, the optical system 100 of the present invention corresponds to the case of G=25, and can form 25 focused beams having different wavefronts from each other.

In one embodiment, it is assumed that the beam size on the light focusing device PSV is 25 mm, the distance between the light focusing device PSV and the focal plane FPL is 500 mm, and the central wavelength of the light is 800 nm.

To create focal points having 25 different aberrations on the focal plane FPL, the numerical values shown in Table 1 below were used.

[Table 1]

| Group No. g | Number of pinholes | Pinhole diameter ($\mu m$) | $x_{out}^{(g)}$ (mm) | $y_{out}^{(g)}$ (mm) | $h$ | $C_h$ |
|---|---|---|---|---|---|---|
| 1 | 30200 | 10 | -0.4 | 0 | 4 | -2.5 |
| 2 | 15100 | 10 | -0.2 | 0 | 4 | -1.5 |
| 3 | 15100 | 10 | 0 | 0 | 4 | 0 |
| 4 | 15100 | 10 | 0.2 | 0 | 4 | 1.5 |

(continued)

| Group No. g | Number of pinholes | Pinhole diameter ($\mu m$) | $x_{out}^{(g)}$ (mm) | $y_{out}^{(g)}$ (mm) | $h$ | $C_h$ |
|---|---|---|---|---|---|---|
| 5 | 30200 | 10 | 0.4 | 0 | 4 | 2.5 |
| 6 | 15100 | 10 | -0.2 | 0.4 | 3 | 2.5 |
| 7 | 15100 | 10 | -0.2 | 0.2 | 3 | -2.5 |
| 8 | 15100 | 10 | -0.4 | 0.4 | 5 | 2.5 |
| 9 | 15100 | 10 | -0.4 | 0.2 | 5 | -2.5 |
| 10 | 15100 | 10 | 0 | 0.4 | 6 | 2.5 |
| 11 | 15100 | 10 | 0 | 0.2 | 6 | -2.5 |
| 12 | 15100 | 10 | 0.2 | 0.4 | 9 | 2.5 |
| 13 | 15100 | 10 | 0.2 | 0.2 | 9 | -2.5 |
| 14 | 15100 | 10 | 0.4 | 0.4 | 12 | 2.5 |
| 15 | 15100 | 10 | 0.4 | 0.2 | 12 | -2.5 |
| 16 | 15100 | 10 | -0.4 | -0.2 | 7 | 2.5 |
| 17 | 15100 | 10 | -0.4 | -0.4 | 7 | -2.5 |
| 18 | 15100 | 10 | -0.2 | -0.2 | 8 | 2.5 |
| 19 | 15100 | 10 | -0.2 | -0.4 | 8 | -2.5 |
| 20 | 15100 | 10 | 0.2 | -0.2 | 11 | 2.5 |
| 21 | 15100 | 10 | 0.2 | -0.4 | 11 | -2.5 |
| 22 | 15100 | 10 | 0 | -0.2 | 13 | 2.5 |
| 23 | 15100 | 10 | 0 | -0.4 | 13 | -2.5 |
| 24 | 15100 | 10 | 0.4 | -0.2 | 10 | 2.5 |
| 25 | 15100 | 10 | 0.4 | -0.4 | 10 | -2.5 |

Approximately 15,100 micro-diffraction elements (circular micro-pinholes) were used per group. For the beams of g=1 and g=5, the beam spreading is large and the intensity is weak, so twice as many micro-diffraction elements were used to increase the intensity. To achieve a similar effect, the same result can be obtained by changing the size of the micro-diffraction elements instead of changing the number of micro-diffraction elements.

In one embodiment, the wavefront $\Phi^{(g)}(x, y)$ applied to the g-th focused beam in Table 1 is composed of Zernike polynomials $Z_h(x, y)$ of the h-th OSA/ANSI index, i.e., $\Phi^{(g)}(x,y) = c_h Z_h(x, y)$, where $c_h$ corresponds to the amplitude applied to each Zernike polynomial.

In one embodiment, to adjust the position of a focused beam, the coordinate of the focal point can be changed. Alternatively, the coordinate $\left(x_{out}^{(g)}, y_{out}^{(g)}\right)$ of the focal point can be set to 0, and the amplitude values $c_1$ and $c_2$ of $Z_1$ (vertical tilt) and $Z_2$ (horizontal tilt), corresponding to the tilt of the wavefront, can be changed instead. The two methods for determining the position of a focused beam are mathematically equivalent.

In one embodiment, the positions of the focal points were separated by changing the coordinates $\left(x_{out}^{(g)}, y_{out}^{(g)}\right)$ of the focal points. Although multiple wavefront basis functions can be superimposed to apply a desired wavefront, in one embodiment, only one wavefront basis function was used per group. The focal points generated on the focal plane FPL using the numerical values shown in Table 1 can be calculated using the Fresnel-Huygens formula.

The focal points in the case where there is no aberration in the incident light appeared as shown in FIG. 7. Since different aberrations were applied to the 25 beams as shown in Table 1, it can be confirmed that the shapes of the focal points differ from each other depending on the applied wavefront. The focal points in the case where the incident light has vertical astigmatism appeared as shown in FIG. 8.

Among the 25 focal points, the light corresponding to g=8 and the light corresponding to g=9 were configured so that astigmatism of opposite signs is applied to each other.

Referring to FIG. 8, when the incident light has positive astigmatism, it can be seen that the light of g=9, to which positive astigmatism has already been applied, has a further distorted shape, and the light of g=8, to which negative astigmatism has been applied, cancels the positive astigmatism to generate a more intensely focused focal point.

Accordingly, in one embodiment according to the present invention, since the aberration present in the incident light and the magnitude of the aberration can be directly determined upon immediately viewing the 25 focused beams, the effect of information acquisition can be enhanced.

Further, referring to FIGS. 7 and 8, the beams corresponding to g=1 through g=5 were designed to have slightly different defocus values from each other. In this manner, the intensity distribution and wavefront of the incident light can be reconstructed using a coherent diffraction imaging method that reconstructs the wavefront by using focused light having different defocus values or different applied wavefronts.

The foregoing describes specific embodiments for carrying out the present invention. The present invention will include not only the embodiments described above, but also embodiments that may be simply modified in design or easily changed. In addition, the present invention will also include technologies that can be easily modified and implemented using the embodiments. Therefore, the scope of the present invention should not be limited to the embodiments described above, but should be defined by the claims set forth below as well as equivalents thereof.

**Claims**

1. A light focusing device comprising micro-diffraction elements configured to diffract incident light, applied by a user, into G focused beams,

   wherein the micro-diffraction elements each belong to one of G groups,
   wherein micro-diffraction elements belonging to a g-th group among the G groups generate a g-th focused beam,
   wherein a density distribution of the micro-diffraction elements belonging to the g-th group is adjustable to apply an arbitrary intensity distribution to the g-th focused beam before the g-th focused beam is focused,
   wherein positions of the micro-diffraction elements belonging to the g-th group are adjustable to apply an arbitrary wavefront to the g-th focused beam before the g-th focused beam is focused, and
   wherein G is configured to be 2 or greater.

2. The light focusing device of claim 1, wherein the micro-diffraction elements comprise micro-structures that cause diffraction in a reflection or transmission direction, including micro-diffraction mirrors and micro-pinholes.

3. The light focusing device of claim 1, wherein the G focused beams focused by the micro-diffraction elements of the light focusing device are focused at different positions on a single focal plane.

4. The light focusing device of claim 1, wherein a coordinate $\left( x_n^{(g)}, y_n^{(g)}, z_n^{(g)} \right)$ at which an n-th micro-diffraction element among the micro-diffraction elements belonging to the g-th group is arranged is determined such that positions of the micro-diffraction elements do not overlap each other, and simultaneously such that a phase error $(\epsilon_n^{(g)})$ determined by the equation below is as close to 0 as possible,

$$\epsilon_n^{(g)} = \left| k \left[ p_n^{(g)} + q_n^{(g)} - p_{in} - q_{out}^{(g)} - m\lambda \right] - \Phi^{(g)}(x, y) \right|^2$$

wherein $p_n^{(g)}$ is a distance between a light source $(x_{in}, y_{in}, z_{in})$ and an n-th micro-diffraction element $\left( x_n^{(g)}, y_n^{(g)}, z_n^{(g)} \right)$ belonging to the g-th group, and is calculated by the equation below,

$$p_n^{(g)} = \sqrt{\left( x_n^{(g)} - x_{in} \right)^2 + \left( y_n^{(g)} - y_{in} \right)^2 + \left( z_n^{(g)} - z_{in} \right)^2}$$

wherein $q_n^{(g)}$ is a distance between an n-th micro-diffraction element $\left(x_n^{(g)}, y_n^{(g)}, z_n^{(g)}\right)$ belonging to the g-th group and a focal point $\left(x_{out}^{(g)}, y_{out}^{(g)}, z_{out}^{(g)}\right)$ of the g-th focused beam, and is calculated by the equation below,

$$q_n^{(g)} = \sqrt{\left(x_n^{(g)} - x_{out}^{(g)}\right)^2 + \left(y_n^{(g)} - y_{out}^{(g)}\right)^2 + \left(z_n^{(g)} - z_{out}^{(g)}\right)^2}$$

wherein $p_{in}$ is a distance between the light source and a central point of the light focusing device, and is calculated by the equation below,

$$p_{in} = \sqrt{x_{in}^2 + y_{in}^2 + z_{in}^2}$$

wherein $q_{out}^{(g)}$ is a distance between a center $(x = 0, y = 0, z = 0)$ of the light focusing device and the focal point $\left(x_{out}^{(g)}, y_{out}^{(g)}, z_{out}^{(g)}\right)$ of the g-th focused beam, and is calculated by the equation below,

$$q_{out}^{(g)} = \sqrt{\left(x_{out}^{(g)}\right)^2 + \left(y_{out}^{(g)}\right)^2 + \left(z_{out}^{(g)}\right)^2}$$

wherein $m$ is a non-negative integer, $k$ is a wave number of the incident light and is a number obtained by dividing a product of $2\pi$ and a refractive index of a space through which light travels by a central wavelength of the light, and wherein $\Phi^{(g)}(x, y)$ is an arbitrary wavefront function applied to the g-th focused beam before the g-th focused beam is focused by the micro-diffraction elements belonging to the g-th group.

5. The light focusing device of claim 1, wherein a size of the micro-diffraction elements is determined such that a change in the phase error $\left(\epsilon_n^{(g)}\right)$ within the n-th micro-diffraction element belonging to the g-th group is less than $\pi$.

6. The light focusing device of claim 1, wherein an intensity of the G focused beams is adjustable by adjusting the size of the micro-diffraction elements.

7. The light focusing device of claim 1, one or more pairs of focused beams among the G focused beams apply the wavefront function with opposite signs to each other, so that wavefront information of the incident light can be recognized without a separate reconstruction process.

8. The light focusing device of claim 1, the intensity distribution and wavefront of the incident light can be reconstructed using a coherent diffraction imaging reconstruction method or the like, using the G focused beams or a portion thereof.

9. The light focusing device of claim 1, in a portion of the light focusing device where no micro-diffraction elements are present, some or all of the incident light is absorbed, transmitted, or reflected, so that the incident light can be used for another purpose, comprising the light focusing device.

10. An optical system comprising:

a light focusing device comprising micro-diffraction elements configured to diffract incident light, applied by a user, into G focused beams; and an imaging device configured to receive the G focused beams focused by the micro-diffraction elements of the light focusing device and convert the received beams into electrical signals, wherein the micro-diffraction elements each belong to one of G groups, wherein micro-diffraction elements belonging to a g-th group among the G groups generate a g-th focused beam, wherein a density distribution of the micro-diffraction elements belonging to the g-th group is adjustable to apply an arbitrary intensity distribution to the g-th focused beam before the g-th focused beam is focused,

wherein positions of the micro-diffraction elements belonging to the g-th group are adjustable to apply an arbitrary wavefront to the g-th focused beam before the g-th focused beam is focused,

wherein G is configured to be 2 or greater, and

wherein the optical system is capable of measuring the intensity distribution and wavefront of the incident light.

11. The optical system of claim 10, wherein the micro-diffraction elements comprise micro-structures that cause diffraction in a reflection or transmission direction, including micro-diffraction mirrors and micro-pinholes.

12. The optical system of claim 10, the G focused beams focused by the micro-diffraction elements of the light focusing device are focused at different positions on a single focal plane.

13. The optical system of claim 10, wherein a coordinate $\left( x_n^{(g)}, y_n^{(g)}, z_n^{(g)} \right)$ at which an n-th micro-diffraction element among the micro-diffraction elements belonging to the g-th group is arranged is determined such that positions of the micro-diffraction elements do not overlap each other, and simultaneously such that a phase error $\left( \epsilon_n^{(g)} \right)$ determined by the equation below is as close to 0 as possible,

$$\epsilon_n^{(g)} = \left| k \left[ p_n^{(g)} + q_n^{(g)} - p_{in} - q_{out}^{(g)} - m\lambda \right] - \Phi^{(g)}(x, y) \right|^2$$

wherein $p_n^{(g)}$ is a distance between a light source $(x_{in}, y_{in}, z_{in})$ and an n-th micro-diffraction element $\left( x_n^{(g)}, y_n^{(g)}, z_n^{(g)} \right)$ belonging to the g-th group, and is calculated by the equation below,

$$p_n^{(g)} = \sqrt{\left( x_n^{(g)} - x_{in} \right)^2 + \left( y_n^{(g)} - y_{in} \right)^2 + (z_{in})^2}$$

wherein $q_n^{(g)}$ is a distance between an n-th micro-diffraction element $\left( x_n^{(g)}, y_n^{(g)}, z_n^{(g)} \right)$ belonging to the g-th group and a focal point $\left( x_{out}^{(g)}, y_{out}^{(g)}, z_{out}^{(g)} \right)$ of the g-th focused beam, and is calculated by the equation below,

$$q_n^{(g)} = \sqrt{\left( x_n^{(g)} - x_{out}^{(g)} \right)^2 + \left( y_n^{(g)} - y_{out}^{(g)} \right)^2 + \left( z_{out}^{(g)} \right)^2}$$

wherein $p_{in}$ is a distance between the light source $(x_{in}, y_{in}, z_{in})$ and a central point (x = 0, y = 0, z = 0) of the light focusing device, and is calculated by the equation below,

$$p_{in} = \sqrt{x_{in}^2 + y_{in}^2 + z_{in}^2}$$

wherein $q_{out}^{(g)}$ is a distance between a center (x = 0, y = 0, z = 0) of the light focusing device and the focal point $\left( x_{out}^{(g)}, y_{out}^{(g)}, z_{out}^{(g)} \right)$ of the g-th focused beam, and is calculated by the equation below,

$$q_{out}^{(g)} = \sqrt{\left( x_{out}^{(g)} \right)^2 + \left( y_{out}^{(g)} \right)^2 + \left( z_{out}^{(g)} \right)^2}$$

wherein $m$ is a non-negative integer, $k$ is a wave number of the incident light and is a number obtained by dividing a product of $2\pi$ and a refractive index of a space through which light travels by a central wavelength of the light, and wherein $\Phi^{(g)}(x, y)$ is an arbitrary wavefront function applied to the g-th focused beam before the g-th focused beam is focused by the micro-diffraction elements belonging to the g-th group.

14. The optical system of claim 10, wherein a size of the micro-diffraction elements is determined such that a change in the phase error $\left(\epsilon_n^{(g)}\right)$ within the n-th micro-diffraction element belonging to the g-th group is less than $\pi$.

15. The optical system of claim 10, wherein an intensity of the G focused beams is adjustable by adjusting the size of the micro-diffraction elements.

16. The optical system of claim 10, wherein one or more pairs of focused beams among the G focused beams apply the wavefront function with opposite signs to each other, so that wavefront information of the incident light can be recognized without a separate reconstruction process.

17. The optical system of claim 10, wherein the wavefront is reconstructable using a coherent diffraction imaging reconstruction method, using the G focused beams or a portion thereof.

18. The optical system of claim 10, wherein, in a portion of the light focusing device where no micro-diffraction elements are present, some or all of the incident light is absorbed, transmitted, or reflected, so that the incident light can be used for another purpose.

19. The optical system of claim 10, wherein a relationship between wavefronts measured using two or more light focusing devices is established, and intensity distribution and wavefront information of an incident laser beam at a location intended to be measured by a remaining one light focusing device among the two or more light focusing devices is inferable through intensity distribution and wavefront information measured at any one light focusing device among the two or more light focusing devices using the established relationship.

# FIG. 1

EP 4 787 057 A1

# FIG. 2

$FCp1\left(x_{out}^{(g=1)}, y_{out}^{(g=1)}, z_{out}^{(g=1)}\right)$

IMD

$DEp1\left(x_{n}^{(g=1)}, y_{n}^{(g=1)}, z = 0\right)$

PSV

$y$

$q_{n}^{(g=1)}$

CTL1

$z$

$q_{out}^{(g=1)}$

FCp2

$p_{n}^{(g=1)}$

DEp1

$x$

FPL

$p_{in}$

DEp2

$Cp\ (x = 0, y = 0, z = 0)$

$LS(x_{in}, y_{in}, z_{in})$

CTL2

EP 4 787 057 A1

# FIG. 3

# FIG. 4

# FIG. 5

EP 4 787 057 A1

# FIG. 6

FIG. 7

25 beams generated using incident light without aberration

# FIG. 8

25 beams generated using incident light having astigmatism

EP 4 787 057 A1

# EP 4 787 057 A1

## INTERNATIONAL SEARCH REPORT

| | International application No. |
|---|---|
| | **PCT/KR2024/096194** |

### A. CLASSIFICATION OF SUBJECT MATTER

**G02B 27/09**(2006.01)i; **G02B 27/42**(2006.01)i; **G02B 19/00**(2006.01)i

According to International Patent Classification (IPC) or to both national classification and IPC

### B. FIELDS SEARCHED

Minimum documentation searched (classification system followed by classification symbols)

G02B 27/09(2006.01); G01J 3/40(2006.01); G01J 9/00(2006.01); G03F 1/62(2012.01); G03F 1/84(2012.01); G06T 7/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 집속광(focusing light), 회절(diffraction), 미세 회절 요소(micro diffractive element), 밀도 분포(density distribution), 세기 분포(intensity distribution), 파면(wavefront)

### C. DOCUMENTS CONSIDERED TO BE RELEVANT

| Category* | Citation of document, with indication, where appropriate, of the relevant passages | Relevant to claim No. |
|---|---|---|
| A | JP 2023-090091 A (HAMAMATSU PHOTONICS K.K.) 29 June 2023 (2023-06-29)<br>See paragraphs [0033]-[0075] and figures 5-6. | 1-19 |
| A | KR 10-0805823 B1 (KOREA RESEARCH INSTITUTE OF STANDARDS AND SCIENCE) 21 February 2008 (2008-02-21)<br>See paragraphs [0036]-[0048] and figures 1-2. | 1-19 |
| A | KR 10-2017-0022816 A (KOREA ADVANCED INSTITUTE OF SCIENCE AND TECHNOLOGY) 02 March 2017 (2017-03-02)<br>See paragraphs [0048]-[0058] and figures 1-2. | 1-19 |
| A | JP 2001-108529 A (JAPAN ATOM ENERGY RESEARCH INSTITUTE) 20 April 2001 (2001-04-20)<br>See paragraphs [0012]-[0017] and figure 1. | 1-19 |
| A | KR 10-2022-0098921 A (E-SOL, INC.) 12 July 2022 (2022-07-12)<br>See paragraphs [0031]-[0041] and figure 3. | 1-19 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **31 December 2024** | **31 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 787 057 A1

| INTERNATIONAL SEARCH REPORT<br>Information on patent family members | | | | International application No.<br>**PCT/KR2024/096194** | | | |
|---|---|---|---|---|---|---|---|
| Patent document<br>cited in search report | | | Publication date<br>(day/month/year) | Patent family member(s) | | | Publication date<br>(day/month/year) |
| JP | 2023-090091 | A | 29 June 2023 | CN | 118401814 | A | 26 July 2024 |
| | | | | EP | 4400818 | A1 | 17 July 2024 |
| | | | | KR | 10-2024-0118742 | A | 05 August 2024 |
| | | | | WO | 2023-112372 | A1 | 22 June 2023 |
| KR | 10-0805823 | B1 | 21 February 2008 | None | | | |
| KR | 10-2017-0022816 | A | 02 March 2017 | KR | 10-1761014 | B1 | 25 July 2017 |
| JP | 2001-108529 | A | 20 April 2001 | None | | | |
| KR | 10-2022-0098921 | A | 12 July 2022 | KR | 10-2556763 | B1 | 18 July 2023 |

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6570143 B